# EUROPÄISCHE PATENTSCHRIFT

(11) **EP 4 011 820 B1**
(45) Veröffentlichungstag und Bekanntmachung des Hinweises auf die Patenterteilung: **01.01.2025**
(21) Anmeldenummer: 21207061.9
(22) Anmeldetag: 09.11.2021
(51) Int. Cl.: B67C 3/00, G01V 8/10, G05B 19/418

(54) **BEHÄLTERBEHANDLUNGSVORRICHTUNG UND VERFAHREN ZUM IDENTIFIZIEREN EINES WECHSELTEILS EINER BEHÄLTERBEHANDLUNGSVORRICHTUNG**
CONTAINER HANDLING APPARATUS AND METHOD FOR IDENTIFYING AN EXCHANGABLE MEMBER OF A CONTAINER HANDLING APPARATUS
DISPOSITIF DE TRAITEMENT DE RÉCIPIENTS ET PROCÉDÉ D'IDENTIFICATION D'UNE PARTIE INTERCHANGEABLE D'UN DISPOSITIF DE TRAITEMENT DE RÉCIPIENTS

(30) Priorität: 08.12.2020 DE 102020132682
(43) Veröffentlichungstag der Anmeldung: 15.06.2022
(73) Patentinhaber: KRONES Aktiengesellschaft, 93073 Neutraubling (DE)
(72) Erfinder: KÄSTNER, Florian, 93073 Neutraubling (DE); SAUMWEBER, Florian, 93073 Neutraubling (DE)
(74) Vertreter: Benninger, Johannes

(56) Entgegenhaltungen:
- EP-A1- 0 744 224
- DE-A1- 3 804 499

## Beschreibung

Die vorliegende Erfindung betrifft eine Behälterbehandlungsvorrichtung und ein Verfahren zum Identifizieren eines Wechselteils einer Behälterbehandlungsvorrichtung gemäß den Merkmalen der unabhängigen Ansprüche.

Die vorliegende Erfindung befasst sich mit Verpackungsmaschinen, welche mit produktabhängigen Formatteilen ausgestattet sind. Die jeweilig verwendeten Formatteile bestimmen, welche Produkte in der entsprechend ausgestatteten Verpackungsmaschine bearbeitet werden können. Solche Formatteile werden nachfolgend als Wechselteile bezeichnet.

Bei einer Sorten- oder Programmumstellung ist es somit in der Regel notwendig, die Verpackungsmaschine entsprechend umzurüsten. Hierbei müssen auch bei vollautomatischen Verpackungsmaschinen breitenbedingte Formatteile gewechselt werden, beispielsweise der sogenannte Spreizkeil in Behälterbehandlungsvorrichtung. Spreizkeile werden verwendet, um einzelne Artikel oder Behälter aus einem Massenstrom abzutrennen und in Bahnen einzuteilen. Dabei kann eine Ausrichtung der Artikel oder Behälter erfolgen.

Auch sog. Einteilerleisten müssen als jeweilige Formatteile bedarfs- und situationsabhängig gewechselt werden. Solche sog. Einteilerleisten werden verwendet, um Behälter aus einem Massenstrom abzutrennen und zu Gebinden zu variieren. Die Einteilerleisten variieren insbesondere je nach Gassenbreite.

Die unterschiedlichen Formatteile unterscheiden sich teilweise nur geringfügig in ihren Abmessungen. Jedoch kann die Verwendung falscher Formatteile zu Störungen im Produktionsablauf, zu Qualitätsverlusten am Produkt, zum Maschinenstillstand oder auch zur Beschädigung der Maschine führen. Aus diesem Grund ist eine Kennzeichnung der Formatteile wichtig, um eine entsprechende Zuordnung zu gewährleisten.

Eine Zuordnung durch Beschriftungen oder Farbcodes kann umständlich sein, da der Benutzer jeweils die entsprechende Dokumentation zur Hand haben muss. Dennoch ist die Gefahr von Fehlbedienungen und falschen Zuordnungen weiterhin relativ groß, da insbesondere in den beengten und oftmals mit nur kleinen Zeiträumen verbundenen Einbausituationen die Kennzeichnungen auf den neu zu montierenden Einteilleisten leicht verwechselt werden können.

Gattungsgleiche Behälterbehandlungsvorrichtungen sind aus EP 0 744 224 A1 und DE 38 04 499 A1 bekannt.

Die Aufgabe der Erfindung besteht darin, in einfacherer und zuverlässigerer Weise eine korrekte Identifizierung und Zuordnung von Formatteilen zu ermöglichen, womit die Gefahr von Fehlzuordnungen reduziert werden kann.

Die obige Aufgabe wird durch eine Behälterbehandlungsvorrichtung und ein Verfahren zum Identifizieren eines Wechselteils einer Behälterbehandlungsvorrichtung gelöst, die die Merkmale in den unabhängigen Patentansprüchen umfassen. Weitere vorteilhafte Ausgestaltungen werden durch die Unteransprüche beschrieben.

Die Erfindung bezieht sich auf eine Behälterbehandlungsvorrichtung, insbesondere eine Verpackungsmaschine für Artikel in Form von Getränkebehältern. Die Behälterbehandlungsvorrichtung umfasst eine Steuerungseinrichtung und mindestens ein Wechselteil, wobei das Wechselteil mindestens ein Identifikationsmerkmal aufweist, welches vermittels einer Lichtschrankenanordnung erfasst und/oder detektiert und vermittels der dadurch erfassten Daten identifiziert werden kann. Insbesondere erfolgt hierbei eine Zuordnung des Wechselteils zu einem definierten Produktionsmodus, insbesondere zu bestimmten innerhalb der Behälterbehandlungsvorrichtung zu handhabenden und/oder herzustellenden Produkten.

Bei einem Wechselteil handelt es sich um eine Maschinenkomponente, welche bei einem Produktwechsel ausgetauscht wird, um die Behälterbehandlungsvorrichtung in Abhängigkeit von dem neuen Produkt umzurüsten und anzupassen, beispielsweise wenn andere Artikel in der Behälterbehandlungsvorrichtung bearbeitet werden sollen, beispielsweise wenn andere Getränkebehälter verpackt und/oder wenn andere Gebindegrößen produziert werden sollen.

Bei den Wechselteilen kann es sich beispielsweise um Spreizkeile innerhalb eines Artikelzulaufs, um Gassenbleche zur Reihenbildung innerhalb eines Artikelzulaufs, um Einteilerleisten mit Einteilerfingern (oder Einteilfingern) innerhalb eines Einteilmoduls, um Steckbleche, Seitenbegrenzungen, beispielsweise Kurvenverläufe o.ä. handeln.

Die Steuerungseinrichtung umfasst Informationen zu dem mindestens einen Wechselteil, und Informationen zu unterschiedlichen Produktionsmodi der Behälterbehandlungsvorrichtung. Auch kann vorgesehen sein, dass die Steuerungsvorrichtung bei einem Produktwechsel entsprechend mit neuen Informationen versorgt werden kann. Die Steuerungseinrichtung ist dazu ausgebildet, das Wechselteil vermittels der durch die Lichtschrankenanordnung ermittelten Daten zu identifizieren und insbesondere einem bestimmten Produktionsmodus zuzuordnen.

In diesem Zusammenhang kann vorgesehen sein, dass die Steuerungseinrichtung Informationen zum identifizierten Wechselteil an eine entsprechende Ausgabevorrichtung, beispielsweise eine Benutzeroberfläche, ein Display o.ä. übermittelt und bereitstellt.

Das mindestens eine Identifikationsmerkmal kann gemäß einer Ausführungsform durch eine Flanke oder eine Kante des Wechselteils gebildet werden. Hierbei kann es sich um eine am Wechselteil vorhandene, insbesondere funktionelle, Flanke oder Kante handeln. Alternativ kann vorgesehen sein, dass zusätzliche Flanken oder Kanten am Wechselteil als Identifikationsmerkmale ausgebildet werden.

Alternativ oder zusätzlich kann das mindestens eine Identifikationsmerkmal durch mindestens eine Bohrung oder ein Bohrlochmuster gebildet werden. Auch hierbei kann das Identifikationsmerkmale durch eine am Wechselteil vorhandene Bohrung oder ein am Wechselteil vorhandenes Bohrlochmuster gebildet werden, oder aber es werden zusätzliche Bohrungen oder Bohrlochmuster am Wechselteil eingebracht.

Erfindungsgemäß ist vorgesehen, dass die zur Identifizierung der Wechselteile verwendete Lichtschrankenanordnung Bestandteil eines Behälterbehandlungsmoduls der Behälterbehandlungsvorrichtung ist. Insbesondere handelt es sich also um eine Lichtschrankenanordnung, die eine bestimmte Funktion im normalen Produktionsablauf innehat. Insbesondere erfasst die Lichtschrankenanordnung in einem Produktionsmodus oder Betriebsmodus Parameter eines innerhalb des Behälterbehandlungsmoduls gehandhabten Artikels und/oder einer innerhalb des Behälterbehandlungsmoduls gehandhabten Umverpackung und dient somit der Überwachung des korrekten Produktionsablaufs.

Dagegen ist vorgesehen, dass die Lichtschrankenanordnung im sogenannten Wechselmodus Identifikationsmerkmale des Wechselteils erfasst. Die Lichtschrankenanordnung eines Behälterbehandlungsmoduls kann hierbei sowohl Identifikationsmerkmale eines ihr zugeordneten Wechselteils erfassen, als auch Identifikationsmerkmale eines Wechselteils eines anderen Behälterbehandlungsmoduls der Behälterbehandlungsvorrichtung.

Beispielsweise kann hierfür die Lichtschrankenanordnung eines Folieneinschlagmoduls verwendet werden, in welchem Folieneinschlagmodul im normalen Produktionsmodus jeweils eine Mehrzahl von Getränkebehältern mit einer Schrumpffolie umhüllt werden. Diese werden mit Schrumpffolie umhüllten Getränkebehälter werden dann zur Fertigstellung der Schrumpfgebinde einem Schrumpftunnel o.ä. zugeführt.

Die Lichtschrankenanordnung kann beispielsweise zur Identifizierung von Spreizkeilen verwendet werden, die beispielsweise als Wechselteile im Einteilmodul, in welchem Artikelgruppen aus mehreren Getränkebehältern gebildet werden, zum Einsatz kommen. Die unterschiedlichen Spreizkeile unterscheiden sich hierbei beispielsweise in ihrer Breite, wobei die Unterschiede für den Operator häufig nicht deutlich erkennbar sind.

Ein Spreizkeil wird in das Folieneinschlagmodul gelegt und manuell oder über die Transporteinrichtung des Folieneinschlagmoduls durch die Lichtschrankenanordnung bewegt. Die durch die Lichtschrankenanordnung detektierten Identifikationsmerkmale werden durch die Steuerungseinheit ausgewertet und es wird über die Benutzeroberfläche die Information ausgegeben, ob es sich hierbei um das korrekte Wechselteil für die Produktumstellung handelt oder eben nicht.

Das Identifikationsmerkmal wird hierbei beispielsweise durch ein Muster von Bohrungen gebildet, wobei es sich insbesondere um Durchgangsbohrungen handelt, die sich durch die gesamte Breite der Spreizkeile erstrecken. Die Steuerungseinheit enthält Informationen, die das Muster von Bohrungen jeweils einem bestimmten Spreizkeil und einem bestimmten Produktionsmodus zuordnet. Der vom Sender der Lichtschrankenanordnung ausgegebene Lichtstrahl wird durch den Spreizkeil jeweils unterbrochen und durchdringt diesen nur im Bereich der Durchgangsbohrungen. Dies wird vom Empfänger der Lichtschrankenanordnung detektiert und ein entsprechendes Signal erzeugt, welches an die Steuerungseinheit übermittelt wird. Die Anzahl und Länge der Signale gibt Auskunft über die Anordnung der Bohrungen und erzeugt insbesondere ein Kodierungsmuster, welches für jedes Wechselteil einzigartig ist.

Das Kodierungsmuster kann im einfachsten Fall durch eine unterschiedliche Anzahl von Bohrungen gebildet sein. Es ist aber auch möglich, die Abstände zwischen den Bohrungen zu variieren und oder mit einem Muster aus runden Bohrungen und Langlochbohrungen zu arbeiten o.ä.

Die Lichtschrankenanordnung kann beispielsweise auch zur Identifizierung von Einteilerleisten eines Gruppiermoduls oder Einteilmoduls verwendet werden. In Abhängigkeit von den jeweiligen Artikeln, insbesondere Getränkebehältern, und den jeweilig herzustellenden Artikelgruppen, welche sich insbesondere in der Anzahl und/oder Anordnung der Artikel innerhalb der Artikelgruppe unterscheiden können, unterscheiden sich die Einteilerleisten.

Beispielsweise weisen unterschiedliche Einteilerleisten jeweils unterschiedlich ausgebildete Einteilerfinger und/oder eine unterschiedliche Anzahl an Einteilerfingern und/oder eine unterschiedliche Anordnung der Einteilerfinger auf. Durch die Lichtschrankenanordnung werden insbesondere die Flanken und/oder der Einteilerfinger erkannt und entsprechende Signale erzeugt.

Beispielsweise wird bei einem Produktwechsel das neue Programm ausgewählt. Nunmehr wird eine Einteilerleiste in das Folieneinschlagmodul gelegt und manuell oder automatisiert durch die Lichtschrankenanordnung bewegt. Anhand der über die Bedieneroberfläche ausgegebenen Information erkennt der Operator sofort, ob es sich um die richtige Einteilerleiste für den neuen Produktionsmodus handelt.

Vorzugsweise wird das Wechselteil in einer definierten Geschwindigkeit über eine Transportvorrichtung des jeweiligen Behälterbehandlungsmoduls mit der Lichtschrankenanordnung bewegt. Alternativ kann vorgesehen sein, dass das Wechselteil durch einen Manipulator, beispielsweise einen Roboter o.ä., gehalten und mit einer definierten Geschwindigkeit an der Lichtschrankenanordnung vorbeigeführt wird.

In vorbeschriebener Weise können Wechselteile innerhalb der Behälterbehandlungsvorrichtung schnell, einfach und sicher identifiziert werden. Dadurch können Fehler beim Umstellen der Behälterbehandlungsvorrichtung vermieden werden, was wiederum die Gefahr eines Maschinenschadens minimiert. Auch die Umrüstzeiten und Montagezeiten können reduziert werden. Die Kodierung über physikalische Merkmale der Wechselteile verhindert zudem die Gefahr, dass sich die Markierungen mit der Zeit ablösen und verloren gehen kann.

Durch entsprechende Programmierung der Steuerungseinrichtung der Behälterbehandlungsvorrichtung, insbesondere indem die entsprechenden Informationen zu den Identifikationsmerkmalen von verschiedenen Wechselteilen bereitgestellt und mit den jeweiligen Produktinformationen verknüpft werden, können auch bestehende Anlagen entsprechend kostengünstig nachgerüstet werden. Die Identifikation über physikalische Merkmale der Wechselteile kann auch als zusätzliche Kontrollfunktion verwendet werden, um Wechselteile, welche beispielsweise eine farbliche Kodierung aufweisen, erneut zu überprüfen und die korrekte Zuordnung sicherzustellen.

Besonders vorteilhaft ist dabei Ausnutzung eines bereits in der Behälterbehandlungsvorrichtung vorhandenen Sensors, insbesondere einer Lichtschrankenanordnung eines Behälterbehandlungsmoduls, so dass hierfür keine Modifikation an Maschinenkomponenten vorhandener Anlagen notwendig ist. Stattdessen kann eine Ausstattung der Steuerungseinheit mit den entsprechenden Informationen im Rahmen einer Neuprogrammierung ausreichen, sofern die Wechselteile - wie beispielsweise die mit Einteilerfingern ausgestatteten Einteilerleisten - physikalische Merkmale - wie beispielsweise definierte Kanten oder Flanken - aufweisen, die als Identifikationsmerkmale verwendet werden können. Ansonsten kann es ausreichen, die Wechselteile entsprechend zu modifizieren, beispielsweise mit unterschiedlichen Bohrlochmustern auszustatten.

Alternativ kann vorgesehen sein, dass die Behälterbehandlungsvorrichtung ein Identifizierungsmodul umfasst. Alternativ kann ein eigenständiges Identifizierungsmodul bereitgestellt werden, welches der Behälterbehandlungsvorrichtung zugeordnet und insbesondere an die Steuerungseinrichtung der Behälterbehandlungsvorrichtung angekoppelt werden kann.

Insbesondere ist vorgesehen, dass die Lichtschrankenanordnung des Identifizierungsmodul Identifikationsmerkmale von unterschiedlichen Wechselteilen erfassen kann, insbesondere von unterschiedlichen Wechselteilen von mindestens zwei Behälterbehandlungsmodulen der Behälterbehandlungsvorrichtung.

Das Identifizierungsmodul umfasst insbesondere eine Lichtschrankenanordnung, weiterhin kann es eine Transporteinrichtung und/oder eine eigene Steuerungseinrichtung und/oder eine Ausgabevorrichtung umfassen.

Das zu identifizierende Wechselteil wird in das Identifizierungsmodul eingelegt und manuell, vermittels eines geeigneten Manipulators oder über die Transporteinrichtung durch die Lichtschrankenanordnung durchgeführt. Die durch die Steuerungseinrichtung ermittelten Informationen werden über die Ausgabevorrichtung ausgegeben.

Besonders bevorzugt wird das Identifizierungsmodul an die Steuerungseinrichtung der Behälterbehandlungsvorrichtung gekoppelt, so dass die entsprechenden Informationen zum Wechselteil über eine Benutzeroberfläche der Behälterbehandlungsvorrichtung ausgegeben werden können.

Ein solches externes Identifizierungsmodul, insbesondere wenn dieses mit einer eigenen Steuerungseinrichtung und einer eigenen Ausgabevorrichtung ausgestattet ist, hat den Vorteil, dass dieses direkt in oder an einem Wechselteillager positioniert werden kann. Der Operator entnimmt dem Lager die Wechselteile, legt diese in das Identifizierungsmodul ein und identifiziert diese: Anschließend kann der Operator mit den korrekt identifizierten Wechselteilen die entsprechenden Behälterbehandlungsmodule der Behälterbehandlungsvorrichtung umrüsten.

Gemäß einer alternativen Ausführungsform kann im Identifizierungsmodul auf die Transporteinrichtung verzichtet werden und stattdessen die Lichtschrankenanordnung beweglich ausgebildet sein.

In allen beschriebenen Ausführungsvarianten ist vorgesehen, dass das Wechselteil relativ zu einer Lichtschrankenanordnung bewegt wird, um Identifikationsmerkmale zu erfassen, welche der Identifizierung des jeweiligen Wechselteils dienen.

Bei der Produktumstellung können somit Wechselteile der Behälterbehandlungsvorrichtung in vorbeschriebener Weise durch den Operator einfach und schnell identifiziert werden, so dass der Operator nicht Gefahr läuft, das falsche Wechselteil zu verbauen.

Es sei an dieser Stelle ausdrücklich erwähnt, dass alle Aspekte und Ausführungsvarianten, die im Zusammenhang mit der erfindungsgemäßen Vorrichtung erläutert wurden, gleichermaßen Teilaspekte des erfindungsgemäßen Verfahrens betreffen oder sein können. Wenn daher an einer Stelle bei der Beschreibung oder auch bei den Anspruchsdefinitionen zur erfindungsgemäßen Behälterbehandlungsvorrichtung von bestimmten Aspekten und/oder Zusammenhängen und/oder Wirkungen die Rede ist, so gilt dies gleichermaßen für das erfindungsgemäße Verfahren. In umgekehrter Weise gilt dasselbe, so dass auch alle Aspekte und Ausführungsvarianten, die im Zusammenhang mit dem erfindungsgemäßen Verfahren erläutert wurden, gleichermaßen Teilaspekte der erfindungsgemäßen Behälterbehandlungsvorrichtung betreffen oder sein können. Wenn daher an einer Stelle bei der Beschreibung oder auch bei den Anspruchsdefinitionen zum erfindungsgemäßen Verfahren von bestimmten Aspekten und/oder Zusammenhängen und/oder Wirkungen die Rede ist, so gilt dies gleichermaßen für die erfindungsgemäße Behälterbehandlungsvorrichtung.

Die nachfolgenden Ausführungen fassen nochmal einige Aspekte der zuvor bereits in verschiedenen Ausführungsvarianten erläuterten Erfindung zusammen, konkretisieren einige Aspekte, sollen jedoch nicht im Widerspruch zu den bereits gemachten Ausführungen gesehen werden, sondern in Zusammenschau, bei Zweifeln ggf. als speziellere Ausführungsvarianten und/oder Abwandlungen. So können, wie bereits oben mehrfach erwähnt, die erfindungsgemäß gekennzeichneten und identifizierbaren Elemente Bestandteile eines Folieneinschlagmoduls einer Behälterbehandlungsvorrichtung oder Behälterbehandlungsvorrichtung sein. Bei der Behälterbehandlungsvorrichtung kann es sich insbesondere um eine Verpackungsanlage für Artikel in Form von Getränkebehältern handeln.

Das mehrfach erwähnte Folieneinschlagmodul umfasst normalerweise mindestens eine Lichtschrankenanordnung, welche im normalen Produktionsmodus beispielsweise die Anwesenheit von Artikeln innerhalb des Folieneinschlagsmoduls und/oder die Anwesenheit der Einschlagfolie und/oder die korrekte Positionierung der Artikel auf der Einschlagfolie detektiert o.ä. Unter Umständen und je nach Ausstattung und/oder der nachgeschalteten Auswerteelektronik können mit einer solchen Lichtschrankenanordnung weitere Informationen über die im Folieneinschlagmodul beförderten oder vorhandenen Produkte und Halbfertigprodukte gewonnen oder erfasst werden, was hier jedoch nicht Thema weiterer Erläuterungen sein soll.

Ist im Zusammenhang mit einem Produktwechsel, d.h. bei einer anderen zu verpackenden Behältervariante oder ähnlicher Veränderung eine Umrüstung der Behälterbehandlungsvorrichtung erforderlich, kann die Lichtschrankenanordnung des Folieneinschlagmoduls vorteilhaft zur Identifizierung der korrekten Formatteile oder Wechselteile verwendet werden, indem die Lichtschrankenanordnung in ergänzender Weise dafür verwendet wird, um bestimmte Identifikationsmerkmale der zu wechselnden Teile oder der sog. Wechselteile zu erfassen.

Insbesondere kann dabei vorgesehen sein, dass die Lichtschrankenanordnung in einem Wechselmodus Identifikationsmerkmale eines Wechselteils erfassen kann, wobei es sich bei dem Wechselteil um einen Bestandteil des Folieneinschlagmoduls oder um einen Bestandteil eines weiteren Behälterbehandlungsmoduls der Behälterbehandlungsvorrichtung handeln kann.

Das Wechselteil wird in das Folieneinschlagmodul eingelegt und über die Transporteinrichtung in die vorgegebene Transportrichtung zumindest abschnittsweise durch das Folieneinschlagmodul bewegt. Dabei wird an der Lichtschrankenanordnung mindestens ein Signal ausgelöst, das an eine Steuerungseinrichtung der Behälterbehandlungsvorrichtung übermittelt wird. Das von der Lichtschrankenanordnung erzeugte Signal unterscheidet sich für unterschiedlichen Wechselteile aufgrund der jeweils an den unterschiedlichen Wechselteilen vorhandenen unterschiedlichen Identifikationsmerkmale.

Die Steuerungseinrichtung ist notwendigerweise mit Informationen zu Produkten, unterschiedlichen Produktionsmodi und den im Rahmen der Produktion notwendigen Wechselteilen und deren jeweiligen Identifikationsmerkmalen ausgestattet. Anhand der übermittelten Daten identifiziert die Steuerungseinrichtung das Wechselteil und übermittelt diese Informationen an eine entsprechende Ausgabevorrichtung, beispielsweise ein Display einer Benutzeroberfläche, die beispielsweise für die allgemeine Steuerung der Behälterbehandlungsvorrichtung verwendet wird.

Es ist also vorgesehen, dass die Steuerungseinrichtung das Wechselteil vermittels der durch die Lichtschrankenanordnung ermittelten Daten identifiziert und insbesondere einem bestimmten Produktionsmodus zuordnet.

Die Wechselteile können beispielsweise durch Spreizkeile oder durch andere austauschbare Elemente gebildet sein. Solche mit unterschiedlichen Identifikationsmerkmalen versehene Spreizkeile unterscheiden sich beispielsweise in ihrer Breite. Das Identifikationsmerkmal kann etwa durch ein Muster von Bohrungen gebildet sein, die gleich oder unterschiedlich gestaltet sein können, solange sie optisch erkennbar und/oder unterscheidbar bzw. eindeutig zuordenbar sind. Die Steuerungseinheit enthält in diesem Fall die notwendigen Informationen, die ein bestimmtes Bohrlochmuster jeweils einem Spreizkeil zuordnet.

Der vom Sender der Lichtschrankenanordnung ausgegebene Laserstrahl wird durch den Spreizkeil jeweils unterbrochen und wird nur vom Empfänger der Lichtschrankenanordnung detektiert, wenn eine Bohrung vorhanden ist, durch die der Laserstrahl hindurch strahlt. Dadurch wird ein entsprechendes Signal erzeugt. Die Anzahl und Länge der Signale gibt Auskunft über die Anordnung der Bohrungen und liefert insbesondere ein definiertes Kodierungsmuster.

Wird durch die Lichtschrankenanordnung das Vorhandensein einer Bohrung oder einer Mehrzahl an Bohrungen detektiert, dann wird über die Steuerungseinheit auf dem Display der Benutzeroberfläche die entsprechende Information ausgegeben, welches das erzeugte Kodierungsmuster einem bestimmten Spreizkeil zuordnet. Insbesondere erzeugt ein definiertes Bohrlochmuster jeweils ein bestimmtes Kodierungsmuster.

Wird beispielsweise nur eine einzelne Bohrung detektiert, dann wird die Information ausgegeben, dass es sich um einen definierten ersten Spreizkeil handelt. Weiterhin kann vorgesehen sein, dass der Benutzer weitere Informationen zu diesem Spreizkeil, beispielsweise dessen Abmessungen, die Art der Artikel, bei welchen der Spreizkeil zum Einsatz kommt etc. über die Ausgabevorrichtung abrufen kann. Werden dagegen mehrere benachbarte Bohrungen detektiert, dann wird die Information ausgegeben, dass es sich entsprechend um einen anderen Spreizkeil handeln muss.

Das Kodierungsmuster kann im einfachsten Fall durch die unterschiedliche Anzahl von Bohrungen gebildet sein. Es ist aber auch möglich, die Abstände zwischen den Bohrungen zu variieren und oder mit einem Muster aus runden Bohrungen und Langlochbohrungen zu arbeiten o.ä. Statt Bohrungen können auch Nocken oder Flanken zur Kodierung der Wechselteile verwendet werden, wie dies nachfolgend im Zusammenhang mit Einteilerleisten beschrieben wird. Wichtig bei allen diesen Varianten ist die optische Erkennbarkeit und Unterscheidbarkeit, damit sich damit unterschiedliche Kodierungen erzeugen lassen.

Bei der Produktumstellung können die Wechselteile durch den Operator einfach und schnell identifiziert werden, so dass der Operator nicht in die Gefahr gerät, das falsche Wechselteil zu verbauen. Das Wechselteil wird in das Folieneinschlagmodul gelegt und manuell oder über die Transporteinrichtung durch die Lichtschrankenanordnung bewegt. Die durch die Lichtschrankenanordnung detektierten Identifikationsmerkmale werden durch die Steuerungseinheit ausgewertet und es wird über die Benutzeroberfläche die Information ausgegeben, ob es sich hierbei um das korrekte Wechselteil für die Produktumstellung handelt. Fehlt die entsprechende Information, ist dies ein klarer und unzweifelhafter Warnhinweis, dass es sich um ein falsches Wechselteil handeln muss.

Die beschriebenen Prinzipien der optischen Erkennung lassen sich in vergleichbarer Weise auch auf für die Identifizierung von Einteilerleisten in einem Folieneinschlagmodul nutzen. Solche Einteilerleisten weisen typischerweise Einteilerfinger in unterschiedlicher Anzahl und Anordnung auf. Durch die Lichtschrankenanordnung werden die Flanken und/oder Kanten der Einteilerfinger erkannt und entsprechende Signale erzeugt.

Analog zum Dekodieren und Identifizieren der Spreizkeile wird bei einem Produktwechsel das neue Programm in der Steuerungseinheit ausgewählt. Nunmehr wird eine Einteilerleiste in das Folieneinschlagmodul gelegt und manuell oder automatisiert durch die Lichtschrankenanordnung bewegt. Anhand der über die Bedieneroberfläche ausgegebenen Information erkennt der Operator sofort, ob es sich um das notwendige Wechselteil handelt.

Die automatisierte Vermessung, bei der das Wechselteil über die Transportvorrichtung durch das Folieneinschlagmodul und insbesondere durch die Lichtschrankenanordnung bewegt wird, hat den Vorteil, dass das Wechselteil mit einer definierten Geschwindigkeit bewegt wird. Alternativ kann vorgesehen sein, dass das Wechselteil durch einen Manipulator, beispielsweise einen Roboter o.ä., gehalten und mit einer definierten Geschwindigkeit durch die Lichtschrankenanordnung gezogen wird.

Mit dem hier beschriebenen Verfahren kann innerhalb des Folieneinschlagmoduls eine Vielzahl von Formatteilen bzw. Wechselteilen der Behälterbehandlungsvorrichtung mit Hilfe eines Zusammenwirkens der Lichtschrankenanordnung und der Steuerungseinheit identifiziert werden, insbesondere auch Wechselteile von anderen Handhabungsmodulen der Behälterbehandlungsvorrichtung, beispielsweise Gassenbleche, Steckblecke, seitliche Kurvenbegrenzungen für den Zulauf der Artikel usw. Dies erlaubt eine schnelle, einfache und sichere Identifikation der Wechselteile. Dadurch können Fehler beim Umstellen der Behälterbehandlungsvorrichtung vermieden werden, was wiederum die Gefahr eines Maschinenschadens minimiert.

Auch die Umrüstzeiten und Montagezeiten können reduziert werden. Die Kodierung über physikalische Merkmale der Wechselteile verhindert zudem die Gefahr, dass sich die Markierungen mit der Zeit ablösen und verloren gehen kann.

Durch Programmierung der Steuerungseinrichtung, insbesondere indem die entsprechenden Informationen zu den Identifikationsmerkmalen bereitgestellt und mit den Produktinformationen verknüpft werden, können auch bestehende Anlagen entsprechend kostengünstig nachgerüstet werden.

Die Identifikation über physikalische Merkmale der Wechselteile kann auch als zusätzliche Kontrollfunktion verwendet werden, um Wechselteile, welche beispielsweise eine farbliche Kodierung aufweisen, erneut zu überprüfen und die korrekte Zuordnung sicherzustellen.

Besonders vorteilhaft ist die Ausnutzung eines bereits in der Behälterbehandlungsvorrichtung vorhandenen Sensors, insbesondere einer Lichtschrankenanordnung, so dass hierfür keine Modifikation an Maschinenkomponenten vorhandener Anlagen notwendig ist. Stattdessen kann eine Ausstattung der Steuerungseinheit mit den entsprechenden Informationen ausreichen, sofern die Wechselteile - wie beispielsweise die mit Einteilerfingern ausgestatteten Einteilerleisten - physikalische Merkmale - wie beispielsweise definierte Kanten oder Flanken - aufweisen, die als Identifikationsmerkmal verwendet werden können.

Ansonsten kann es ggf. auch ausreichen, die Wechselteile entsprechend zu modifizieren, beispielsweise die Spreizkeile mit unterschiedlichen Bohrlochmustern auszustatten.

Alternativ kann vorgesehen sein, dass der Behälterbehandlungsvorrichtung ein eigenes Identifizierungsmodul zugeordnet ist. Ein solches Dekodierungsmodul umfasst insbesondere eine Lichtschrankenanordnung, eine Transporteinrichtung, eine Steuerungseinrichtung und eine Ausgabevorrichtung. Das Wechselteil wird in das Identifizierungsmodul eingelegt und über die Transporteinrichtung durch die Lichtschrankenanordnung durchgeführt. Die durch die Steuerungseinrichtung ermittelten Informationen werden über die Ausgabevorrichtung ausgegeben.

Ein solches externes Identifizierungsmodul hat den Vorteil, dass dieses direkt in oder an einem Wechselteillager positioniert werden kann. Der Operator entnimmt dem Lager die Wechselteile, prüft diese und kann dann mit den korrekt identifizierten Wechselteilen die entsprechenden Module der Behälterbehandlungsvorrichtung umrüsten.

Alternativ kann im Identifizierungsmodul auf die Transporteinrichtung verzichtet werden und stattdessen die Lichtschrankenanordnung beweglich ausgebildet sein. Insbesondere wird die Lichtschrankenanordnung zur Erfassung der Identifikationsmerkmale relativ zu dem in das Identifizierungsmodul eingelegten Wechselteil bewegt.

Eine weitere Ausführungsform eines externen Identifizierungsmoduls kann vorsehen, dass dieses keine eigene Steuerungseinrichtung und Ausgabevorrichtung aufweist, sondern an die Steuerungseinrichtung der Behälterbehandlungsvorrichtung angeschlossen werden kann.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figuren 1 und 2 zeigen die Identifizierung unterschiedlicher Spreizkeile in einem Folieneinschlagmodul.
Figuren 3A bis 3D zeigen unterschiedliche Spreizkeile mit unterschiedlichen Identifikationsmerkmalen in seitlicher Darstellung.
Figuren 4 und 5 zeigen die Identifizierung von Einteilerleisten in einem Folieneinschlagmodul in unterschiedlicher perspektivischer Darstellung.
Figuren 6A bis 6C zeigen jeweils unterschiedliche Einteilerleisten mit unterschiedlichen Identifikationsmerkmalen in seitlichen Darstellungen.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Behälterbehandlungsvorrichtung oder das erfindungsgemäße Verfahren ausgestaltet sein können und stellen keine abschließende Begrenzung dar.

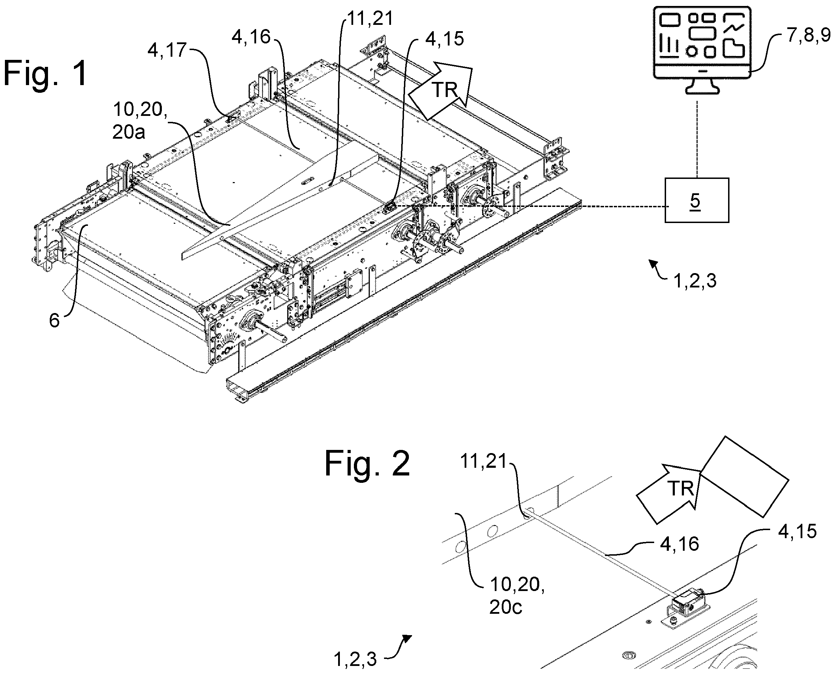

Die schematischen und perspektivischen Ansichten der Figuren 1 und 2 zeigen die Identifizierung unterschiedlicher Spreizkeile 20 in einem Folieneinschlagmodul 3 einer Behälterbehandlungsvorrichtung oder Behälterbehandlungsvorrichtung 1 dar. Bei der Behälterbehandlungsvorrichtung 1 kann es sich insbesondere um eine Verpackungsanlage 2 für Artikel in Form von Getränkebehältern handeln.

Das Folieneinschlagmodul 3 umfasst mindestens eine Lichtschrankenanordnung 4, welche im normalen Produktionsmodus beispielsweise die Anwesenheit von Artikeln innerhalb des Folieneinschlagsmoduls 3 und/oder die Anwesenheit der Einschlagfolie und/oder die korrekte Positionierung der Artikel auf der Einschlagfolie detektiert o.ä.

Beim Umrüsten der Behälterbehandlungsvorrichtung 1, beispielsweise bei einem Produktwechsel, kann die Lichtschrankenanordnung 4 des Folieneinschlagmoduls 3 vorteilhaft zur Identifizierung der korrekten Formatteile oder Wechselteile 10 verwendet werden, indem die Lichtschrankenanordnung 4 genutzt wird, um bestimmte Identifikationsmerkmale 11 der Wechselteile 10 zu erfassen.

Insbesondere ist vorgesehen, dass die Lichtschrankenanordnung 4 in einem Wechselmodus Identifikationsmerkmale 11 eines Wechselteils 10 erfassen, wobei es sich bei dem Wechselteil 10 um einen Bestandteil des Folieneinschlagmoduls 3 oder um einen Bestandteil eines weiteren Behälterbehandlungsmoduls der Behälterbehandlungsvorrichtung 1 handelt.

Das Wechselteil 10 wird in das Folieneinschlagmodul 3 eingelegt und über die Transporteinrichtung 6 in Transportrichtung TR zumindest bereichsweise durch das Folieneinschlagmodul 3 bewegt.

Dabei wird an der Lichtschrankenanordnung 4 mindestens ein Signal ausgelöst, das an eine Steuerungseinrichtung 5 der Behälterbehandlungsvorrichtung 1 übermittelt wird. Das von der Lichtschrankenanordnung 4 erzeugte Signal unterscheidet sich für unterschiedlichen Wechselteile 10 aufgrund der jeweils an den unterschiedlichen Wechselteilen 10 vorhandenen unterschiedlichen Identifikationsmerkmalen 11.

Die Steuerungseinrichtung 5 ist mit Informationen zu Produkten, unterschiedlichen Produktionsmodi und den im Rahmen der Produktion notwendigen Wechselteilen 10 und deren jeweiligen Identifikationsmerkmalen 11 ausgestattet. Anhand der übermittelten Daten identifiziert die Steuerungseinrichtung 5 das Wechselteil 10 und übermittelt diese Informationen an eine entsprechende Ausgabevorrichtung 7, beispielsweise ein Display 8 einer Benutzeroberfläche 9, die beispielsweise für die allgemeine Steuerung der Behälterbehandlungsvorrichtung 1 verwendet wird.

Es ist also vorgesehen, dass die Steuerungseinrichtung 5 das Wechselteil 10 vermittels der durch die Lichtschrankenanordnung 4 ermittelten Daten identifiziert und insbesondere einem bestimmten Produktionsmodus zuordnet.

Die Wechselteile 10 können beispielsweise durch Spreizkeile 20 gebildet werden.

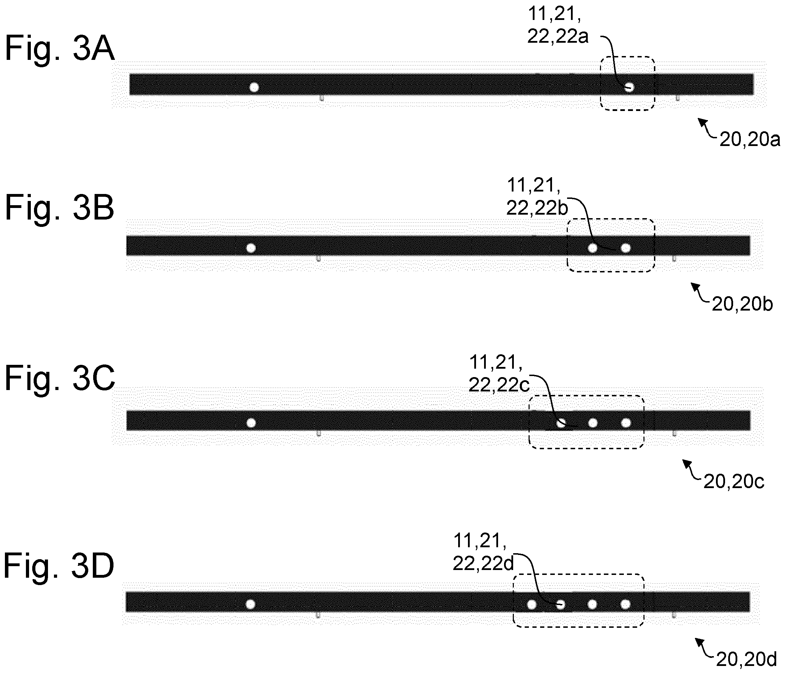

Die schematischen Seitenansichten der Figuren 3A bis 3D zeigen unterschiedliche Ausführungsvarianten von Spreizkeilen 20, die jeweils mit unterschiedlichen Identifikationsmerkmalen 11 versehen sind. Die Spreizkeile 20a bis 20d unterscheiden sich beispielsweise in ihrer Breite (nicht sichtbar). Das Identifikationsmerkmal 11 wird hierbei insbesondere durch ein Muster von Bohrungen 21 gebildet. Die Steuerungseinheit 5 enthält Informationen, die ein bestimmtes Bohrlochmuster 22 jeweils einem Spreizkeil 20a bis 20d zuordnet.

Der vom Sender 15 der Lichtschrankenanordnung 4 ausgegebene Laserstrahl 16 wird durch den Spreizkeil 20 jeweils unterbrochen und wird nur vom Empfänger 17 der Lichtschrankenanordnung 4 detektiert, wenn eine Bohrung 21 vorhanden ist, durch die der Laserstrahl 16 hindurch strahlt. Dadurch wird ein entsprechendes Signal erzeugt. Die Anzahl und Länge der Signale gibt Auskunft über die Anordnung der Bohrungen 21 und erzeugt insbesondere ein definiertes Kodierungsmuster.

Wird durch die Lichtschrankenanordnung 4 das Vorhandensein einer Bohrung 21 oder einer Mehrzahl an Bohrungen 21 detektiert, dann wird über die Steuerungseinheit 5 auf dem Display 8 der Benutzeroberfläche 9 die entsprechende Information ausgegeben, welches das erzeugte Kodierungsmuster einem bestimmten Spreizkeil 20 zuordnet. Insbesondere erzeugt ein definiertes Bohrlochmuster 22 jeweils ein bestimmtes Kodierungsmuster.

Wird beispielsweise nur eine Bohrung 21 detektiert, dann wird die Information ausgegeben, dass es sich um Spreizkeil 20a gemäß Figuren 1 und 3a handelt. Weiterhin kann vorgesehen sein, dass der Benutzer weitere Informationen zum Spreizkeil 20a, beispielsweise dessen Abmessungen, die Art der Artikel, bei welchen der Spreizkeil 20a zum Einsatz kommt etc. über die Ausgabevorrichtung 7 abrufen kann.

Werden dagegen mehrere benachbarte Bohrungen 21 detektiert, dann wird die Information ausgegeben, dass es sich entsprechend um einen Spreizkeil 20c, 20c oder 20d handelt.

Das Kodierungsmuster kann im einfachsten Fall durch die unterschiedliche Anzahl von Bohrungen 21 gebildet sein. Es ist aber auch möglich, die Abstände zwischen den Bohrungen zu variieren und oder mit einem Muster 22 aus runden Bohrungen und Langlochbohrungen zu arbeiten o.ä.

Statt Bohrungen 21 können auch Nocken oder Flanken zur Kodierung der Wechselteile 10 verwendet werden, wie dies nachfolgend im Zusammenhang mit Einteilerleisten 30 beschrieben wird.

Bei der Produktumstellung können die Wechselteile 10 durch den Operator einfach und schnell identifiziert werden, so dass der Operator nicht das falsche Wechselteil 10 verbaut. Das Wechselteil 10 wird in das Folieneinschlagmodul 3 gelegt und manuell oder über die Transporteinrichtung 6 durch die Lichtschrankenanordnung 4 bewegt. Die durch die Lichtschrankenanordnung 4 detektierten Identifikationsmerkmale 11 werden durch die Steuerungseinheit 5 ausgewertet und es wird über die Benutzeroberfläche 9 die Information ausgegeben, ob es sich hierbei um das korrekte Wechselteil 10 für die Produktumstellung handelt oder eben nicht.

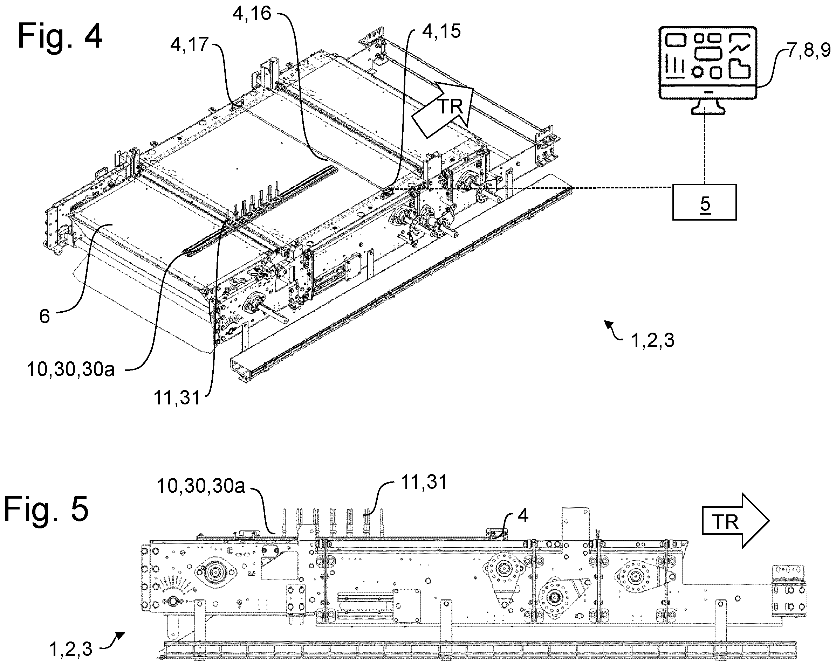

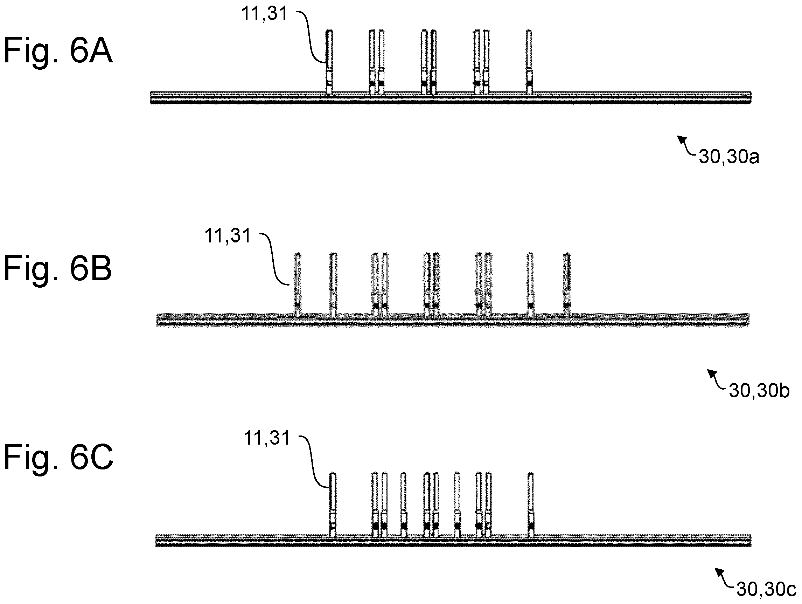

Die schematischen und perspektivischen Ansichten der Figuren 4 und 5 zeigen die Identifizierung von Einteilerleisten 30 in einem Folieneinschlagmodul 3 in unterschiedlichen perspektivischen Darstellungen und Figuren 6A bis 6C zeigen unterschiedliche Einteilerleisten 30 in seitlicher Darstellung. Die Einteilerleisten 30 weisen Einteilerfinger 31 in unterschiedlicher Anzahl und Anordnung auf. Durch die Lichtschrankenanordnung 4 werden die Flanken und/oder Kanten der Einteilerfinger 31 erkannt und entsprechende Signale erzeugt.

Analog zum Dekodieren und Identifizieren der Spreizkeile 20 gemäß den Figuren 1 bis 3 wird bei einem Produktwechsel das neue Programm in der Steuerungseinheit 5 ausgewählt. Nunmehr wird eine Einteilerleiste 30 in das Folieneinschlagmodul 3 gelegt und manuell oder automatisiert durch die Lichtschrankenanordnung 4 bewegt. Anhand der über die Bedieneroberfläche 9 ausgegebenen Information erkennt der Operator sofort, ob es sich um das notwendige Wechselteil 10 handelt.

Die automatisierte Vermessung, bei der das Wechselteil 10 über die Transportvorrichtung 6 durch das Folieneinschlagmodul 3 und insbesondere durch die Lichtschrankenanordnung 4 bewegt wird, hat den Vorteil, dass das Wechselteil 10 mit einer definierten Geschwindigkeit bewegt wird.

Alternativ kann vorgesehen sein, dass das Wechselteil 10 durch einen Manipulator, beispielsweise einen Roboter o.ä., gehalten und mit einer definierten Geschwindigkeit durch die Lichtschrankenanordnung 4 gezogen wird.

Mit dem hier beschriebenen Verfahren können innerhalb des Folieneinschlagmoduls 3 eine Vielzahl von Formatteilen bzw. Wechselteilen 10 der Behälterbehandlungsvorrichtung 1 vermittels des Zusammenwirkens der Lichtschrankenanordnung 4 und der Steuerungseinheit 5 identifiziert werden, insbesondere auch Wechselteile 10 von anderen Handhabungsmodulen der Behälterbehandlungsvorrichtung 1, beispielsweise Gassenbleche, Steckblecke, seitliche Kurvenbegrenzungen für den Zulauf der Artikel usw.

Dies erlaubt eine schnelle, einfache und sichere Identifikation der Wechselteile 10. Dadurch können Fehler beim Umstellen der Behälterbehandlungsvorrichtung 1 vermieden werden, was wiederum die Gefahr eines Maschinenschadens minimiert.

Auch die Umrüstzeiten und Montagezeiten können reduziert werden. Die Kodierung über physikalische Merkmale der Wechselteile 10 verhindert zudem die Gefahr, dass sich die Markierungen mit der Zeit ablösen und verloren gehen kann.

Durch Programmierung der Steuerungseinrichtung 5, insbesondere indem die entsprechenden Informationen zu den Identifikationsmerkmalen 11 bereitgestellt und mit den Produktinformationen verknüpft werden, können auch bestehende Anlagen entsprechend kostengünstig nachgerüstet werden.

Die Identifikation über physikalische Merkmale der Wechselteile 10 kann auch als zusätzliche Kontrollfunktion verwendet werden, um Wechselteile 10, welche beispielsweise eine farbliche Kodierung aufweisen, erneut zu überprüfen und die korrekte Zuordnung sicherzustellen.

Besonders vorteilhaft ist die Ausnutzung eines bereits in der Behälterbehandlungsvorrichtung 1 vorhandenen Sensors, insbesondere einer Lichtschrankenanordnung 4, so dass hierfür keine Modifikation an Maschinenkomponenten vorhandener Anlagen notwendig ist. Stattdessen kann eine Ausstattung der Steuerungseinheit 5 mit den entsprechenden Informationen ausreichen, sofern die Wechselteile 10 - wie beispielsweise die mit Einteilerfingern 31 ausgestatteten Einteilerleisten 30 - physikalische Merkmale - wie beispielsweise definierte Kanten oder Flanken - aufweisen, die als Identifikationsmerkmal 11 verwendet werden können.

Ansonsten kann es ggf. auch ausreichen, die Wechselteile 10 entsprechend zu modifizieren, beispielsweise die Spreizkeile 20 mit unterschiedlichen Bohrlochmustern 22 auszustatten.

Alternativ kann vorgesehen sein, dass der Behälterbehandlungsvorrichtung 1 ein eigenes Identifizierungsmodul zugeordnet ist. Ein solches Dekodierungsmodul umfasst insbesondere eine Lichtschrankenanordnung 4, eine Transporteinrichtung, eine Steuerungseinrichtung und eine Ausgabevorrichtung. Das Wechselteil 10 wird in das Identifizierungsmodul eingelegt und über die Transporteinrichtung durch die Lichtschrankenanordnung durchgeführt. Die durch die Steuerungseinrichtung ermittelten Informationen werden über die Ausgabevorrichtung ausgegeben.

Ein solches externes Identifizierungsmodul hat den Vorteil, dass dieses direkt in oder an einem Wechselteillager positioniert werden kann. Der Operator entnimmt dem Lager die Wechselteile 10, prüft diese und kann dann mit den korrekt identifizierten Wechselteilen 10 die entsprechenden Module der Behälterbehandlungsvorrichtung 1 umrüsten.

Alternativ kann im Identifizierungsmodul auf die Transporteinrichtung verzichtet werden und stattdessen die Lichtschrankenanordnung 4 beweglich ausgebildet sein. Insbesondere wird die Lichtschrankenanordnung zur Erfassung der Identifikationsmerkmale relativ zu dem in das Identifizierungsmodul eingelegten Wechselteil 10 bewegt.

Eine weitere Ausführungsform eines externen Identifizierungsmoduls kann vorsehen, dass dieses keine eigene Steuerungseinrichtung und Ausgabevorrichtung aufweist, sondern an die Steuerungseinrichtung 5 der Behälterbehandlungsvorrichtung 1 angeschlossen werden kann.

### Bezugszeichenliste

- 1: Behälterbehandlungsvorrichtung
- 2: Verpackungsanlage
- 3: Folieneinschlagmodul
- 4: Lichtschrankenanordnung
- 5: Steuerungseinrichtung
- 6: Transporteinrichtung
- 7: Ausgabevorrichtung
- 8: Display
- 9: Benutzeroberfläche
- 10: Wechselteil
- 11: Identifikationsmerkmal
- 15: Sender
- 16: Laserstrahl
- 17: Empfänger
- 20: Spreizkeil
- 21: Bohrung
- 22: Bohrlochmuster
- 30: Einteilerleiste
- 31: Einteilerfinger

- TR: Transportrichtung

## Patentansprüche

1. Behälterbehandlungsvorrichtung (1), insbesondere Verpackungsmaschine, umfassend eine Steuerungseinrichtung (5) und mindestens ein Wechselteil (10),
wobei das Wechselteil (10) mindestens ein Identifikationsmerkmal (11) aufweist,
welches mindestens eine Identifikationsmerkmal (11) durch eine Lichtschrankenanordnung (4) detektierbar ist,
die Steuerungseinrichtung (5) umfassend Informationen zu dem mindestens einen Wechselteil (10) sowie Informationen zu unterschiedlichen Produktionsmodi,
wobei die Steuerungseinrichtung (5) dazu ausgebildet ist, das Wechselteil (10) vermittels der durch die Lichtschrankenanordnung (4) ermittelten Daten zu identifizieren und insbesondere einem bestimmten Produktionsmodus zuzuordnen, wobei die Lichtschrankenanordnung (4) Bestandteil eines Behälterbehandlungsmoduls (3) der Behälterbehandlungsvorrichtung (1) ist,
wobei die Lichtschrankenanordnung (4) dafür ausgebildet und in einer Weise ausgestattet ist, in einem Wechselmodus Identifikationsmerkmale des Wechselteils (10) zu erfassen,
wobei es sich bei dem Wechselteil (10) um einen Bestandteil des Behälterbehandlungsmoduls (3) oder um einen Bestandteil eines weiteren Behälterbehandlungsmoduls der Behälterbehandlungsvorrichtung (1) handelt,
**dadurch gekennzeichnet, dass**
die Lichtschrankenanordnung (4) dafür ausgebildet und in einer Weise ausgestattet ist, in einem Produktionsmodus Parameter eines innerhalb des Behälterbehandlungsmoduls (3) gehandhabten Artikels oder einer innerhalb des Behälterbehandlungsmoduls (3) gehandhabten Umverpackung zu erfassen.

2. Behälterbehandlungsvorrichtung (1) nach Anspruch 1, wobei das mindestens eine Identifikationsmerkmal (11) durch eine Flanke oder eine Kante des Wechselteils (10) gebildet ist, oder wobei das mindestens eine Identifikationsmerkmal (11) durch mindestens eine Bohrung (21) oder ein Bohrlochmuster (22) gebildet ist.

3. Behälterbehandlungsvorrichtung (1) nach Anspruch 1 oder 2, die Behälterbehandlungsvorrichtung (1) umfassend ein Einteilmodul und ein Folieneinschlagmodul (3), wobei die Lichtschrankenanordnung (4) Bestandteil des Folieneinschlagmoduls (3) ist.

4. Behälterbehandlungsvorrichtung (1) nach Anspruch 3, wobei das Wechselteil (10) Bestandteil des Einteilmoduls ist.

5. Behälterbehandlungsvorrichtung (1) nach Anspruch 4, wobei das Wechselteil (10) durch einen Spreizkeil (20) des Einteilmoduls oder durch eine Einteilerleiste (30) des Einteilmoduls gebildet ist.

6. Verfahren zum Identifizieren eines Wechselteils (10) einer Behälterbehandlungsvorrichtung (1), insbesondere einer Verpackungsmaschine,
wobei das Wechselteil (10) mindestens ein Identifikationsmerkmal (11) aufweist, welches mindestens eine Identifikationsmerkmal (11) durch eine Lichtschrankenanordnung (4) erfasst wird,
wobei das Wechselteil (10) anhand des detektierten Identifikationsmerkmals identifiziert und insbesondere einem bestimmten Produktionsmodus zugeordnet wird,
wobei die Detektion der Identifikationsmerkmale (11) vermittels einer Lichtschrankenanordnung (4) eines Behälterbehandlungsmoduls (3) der Behälterbehandlungsvorrichtung (1) erfolgt, wobei die Lichtschrankenanordnung (4) in einem Wechselmodus Identifikationsmerkmale des Wechselteils (10) erfasst,
**dadurch gekennzeichnet, dass**
die Lichtschrankenanordnung (4) in einem Produktionsmodus Parameter eines innerhalb des Behälterbehandlungsmoduls (3) gehandhabten Artikels oder einer innerhalb des Behälterbehandlungsmoduls (3) gehandhabten Umverpackung erfasst.

7. Verfahren nach Anspruch 6, wobei als Identifikationsmerkmale am Wechselteil (10) vorhandene Flanken oder Kanten erfasst und erkannt werden.

8. Verfahren nach Anspruch 6 oder 7, wobei als Identifikationsmerkmale zusätzliche Flanken oder Kanten am Wechselteil (10) ausgebildet werden.

9. Verfahren nach einem der Ansprüche 6 bis 8, wobei als Identifikationsmerkmale am Wechselteil (10) vorhandene Bohrungen (21) oder Bohrlochmuster (22) erkannt werden.

10. Verfahren nach einem der Ansprüche 6 bis 9, wobei als Identifikationsmerkmale zusätzliche Bohrungen (21) oder Bohrlochmuster (22) am Wechselteil (10) ausgebildet werden.

11. Verfahren nach einem der Ansprüche 6 bis 10, wobei zum Identifizieren von Wechselteilen (10) die Lichtschrankenanordnung (4) eines Folieneinschlagmoduls (3) der Behälterbehandlungsvorrichtung (1) verwendet wird.

12. Verfahren nach Anspruch 11, wobei die Lichtschrankenanordnung (4) des Folieneinschlagmoduls (3) zum Identifizieren von Wechselteilen eines Einteilmoduls verwendet wird, insbesondere zum Identifizieren von Spreizkeilen (20) und/oder Einteilerleisten (30).

## Claims

1. A container handling device (1), in particular, a packaging machine, comprising a control device (5) and at least one change part (10),
wherein the change part (10) has at least one identification feature (11),
which at least one identification feature (11) is detectable by a light barrier arrangement (4),
the control device (5) comprising
information on the at least one change part (10) and
information on different production modes,
wherein the control device (5) is designed to identify the change part (10) by means of the data determined by the light barrier arrangement (4) and, in particular, to assign the change part (10) to a specific production mode, wherein the light barrier arrangement (4) is a component of a container handling module (3) of the container handling device (1),
wherein the light barrier arrangement (4) is designed for this purpose and equipped in such a manner as to detect identification features of the change part (10) in a change mode,
wherein the change part (10) is a component of the container handling module (3) or a component of a further container handling module of the container handling device (1),
**characterised in that**
the light barrier arrangement (4) is designed for this purpose and equipped in such a manner as to detect parameters of an article being handled within the container handling module (3) or of an outer packaging being handled within the container handling module (3) in a production mode.

2. The container handling device (1) according to claim 1 wherein the at least one identification feature (11) is formed by a shoulder or by an edge of the change part (10), or wherein the at least one identification feature (11) is formed by at least one borehole (21) or by a borehole pattern (22).

3. The container handling device (1) according to claim 1 or 2, the container handling device (1) comprising a divider module and a film wrapping module (3), wherein the light barrier arrangement (4) is a component of the film wrapping module (3).

4. The container handling device (1) according to claim 3, wherein the change part (10) is a component of the divider module.

5. The container handling device (1) according to claim 4, wherein the change part (10) is formed by an expanding wedge (20) of the divider module or by a divider bar (30) of the divider module.

6. A method for identifying a change part (10) of a container handling device (1), in particular, of a packaging machine,
wherein the change part (10) has at least one identification feature (11),
which at least one identification feature (11) is detected by a light barrier arrangement (4),
wherein the change part (10) is identified on the basis of the detected identification feature and, in particular, is assigned to a specific production mode,
wherein the detection of the identification features (11) is carried out by means of a light barrier arrangement (4) of a container handling module (3) of the container handling device (1), wherein the light barrier arrangement (4) detects identification features of the change part (10) in a change mode,
**characterised in that**
the light barrier arrangement (4) detects parameters of an article being handled within the container handling module (3) or of an outer packaging being handled within the container handling module (3) in a production mode.

7. The method according to claim 6, wherein shoulders or edges present on the change part (10) are detected and recognised as identification features.

8. The method according to claim 6 or 7, wherein additional shoulders or edges are formed as identification features on the change part (10).

9. The method according to one of the claims 6 to 8, wherein boreholes (21) or borehole patterns (22) present on the change part (10) are recognised as identification features.

10. The method according to one of the claims 6 to 9, wherein additional boreholes (21) or borehole patterns (22) are formed as identification features on the change part (10).

11. The method according to one of the claims 6 to 10, wherein the light barrier arrangement (4) of a film wrapping module (3) of the container handling device (1) is used to identify change parts (10).

12. The method according to claim 11, wherein the light barrier arrangement (4) of the film wrapping module (3) is used to identify change parts of a divider module, in particular, to identify expanding wedges (20) and/or divider bars (30).

## Revendications

1. Dispositif de traitement de récipients (1), en particulier machine d'emballage, comprenant un dispositif de commande (5) et au moins une pièce interchangeable (10),
dans lequel la pièce interchangeable (10) présente au moins une caractéristique d'identification (11),
laquelle au moins une caractéristique d'identification (11) peut être détectée par un ensemble de barrage photoélectrique (4),
ledit dispositif de commande (5) comprenant
des informations concernant ladite au moins une pièce interchangeable (10) ainsi que
des informations concernant différents modes de production,
dans lequel le dispositif de commande (5) est conçu pour identifier la pièce interchangeable (10) au moyen des données déterminées par l'ensemble de barrage photoélectrique (4) et en particulier pour l'associer à un mode de production spécifique, dans lequel l'ensemble de barrage photoélectrique (4) est un composant d'un module de traitement de récipients (3) du dispositif de traitement de récipients (1),
dans lequel l'ensemble de barrage photoélectrique (4) est conçu pour et équipé de manière à détecter dans un mode alterné des caractéristiques d'identification de la pièce interchangeable (10),
dans lequel la pièce interchangeable (10) est un composant du module de traitement de récipients (3) ou un composant d'un autre module de traitement de récipients du dispositif de traitement de récipients (1),
**caractérisé par le fait que**
ledit ensemble de barrage photoélectrique (4) est conçu pour et équipé de manière à détecter, dans un mode de production, des paramètres d'un article manipulé à l'intérieur du module de traitement de récipients (3) ou d'un emballage supplémentaire manipulé à l'intérieur du module de traitement de récipients (3).

2. Dispositif de traitement de récipients (1) selon la revendication 1, dans lequel ladite au moins une caractéristique d'identification (11) est formée par un flanc ou un bord de la pièce interchangeable (10), ou dans lequel ladite au moins une caractéristique d'identification (11) est formée par au moins un trou (21) ou un motif de trous (22).

3. Dispositif de traitement de récipients (1) selon la revendication 1 ou 2, le dispositif de traitement de récipients (1) comprenant un module à diviser et un module d'enveloppement de film (3), dans lequel ledit ensemble de barrage photoélectrique (4) est un composant du module d'enveloppement de film (3).

4. Dispositif de traitement de récipients (1) selon la revendication 3, dans lequel la pièce interchangeable (10) est un composant du module à diviser.

5. Dispositif de traitement de récipients (1) selon la revendication 4, dans lequel la pièce interchangeable (10) est formée par une cale d'expansion (20) du module à diviser ou par une baguette à diviser (30) du module à diviser.

6. Procédé d'identification d'une pièce interchangeable (10) d'un dispositif de traitement de récipients (1), en particulier d'une machine d'emballage,
dans lequel la pièce interchangeable (10) présente au moins une caractéristique d'identification (11),
laquelle au moins une caractéristique d'identification (11) est détectée par un ensemble de barrage photoélectrique (4),
dans lequel la pièce interchangeable (10) est identifiée à partir de la caractéristique d'identification détectée et en particulier est associée à un mode de production spécifique,
dans lequel la détection des caractéristiques d'identification (11) se fait au moyen d'un ensemble de barrage photoélectrique (4) d'un module de traitement de récipients (3) du dispositif de traitement de récipients (1), dans lequel ledit ensemble de barrage photoélectrique (4) détecte dans un mode alterné des caractéristiques d'identification de la pièce interchangeable (10),
**caractérisé par le fait que**
ledit ensemble de barrage photoélectrique (4) détecte dans un mode de production des paramètres d'un article manipulé à l'intérieur du module de traitement de récipients (3) ou d'un emballage supplémentaire manipulé à l'intérieur du module de traitement de récipients (3).

7. Procédé selon la revendication 6, dans lequel des flancs ou bords présents sur la pièce interchangeable (10) sont détectés et reconnus en tant que caractéristiques d'identification.

8. Procédé selon la revendication 6 ou 7, dans lequel des flancs ou bords supplémentaires sont formés en tant que caractéristiques d'identification sur la pièce interchangeable (10).

9. Procédé selon l'une quelconque des revendications 6 à 8, dans lequel des trous (21) ou motifs de trous (22) présents sur la pièce interchangeable (10) sont reconnus en tant que caractéristiques d'identification.

10. Procédé selon l'une quelconque des revendications 6 à 9, dans lequel des trous (21) ou motifs de trous (22) supplémentaires sont formés en tant que caractéristiques d'identification sur la pièce interchangeable (10).

11. Procédé selon l'une quelconque des revendications 6 à 10, dans lequel l'ensemble de barrage photoélectrique (4) d'un module d'enveloppement de film (3) du dispositif de traitement de récipients (1) est utilisé pour identifier des pièces interchangeables (10).

12. Procédé selon la revendication 11, dans lequel ledit ensemble de barrage photoélectrique (4) du module d'enveloppement de film (3) est utilisé pour identifier des pièces interchangeables d'un module à diviser, en particulier pour identifier des cales d'expansion (20) et/ou des baguettes à diviser (30).
